# FASCICULE DE BREVET EUROPEEN

(11) **EP 2 914 113 B1**
(45) Date de publication et mention de la délivrance du brevet: **06.05.2020**
(21) Numéro de dépôt: 13792758.8
(22) Date de dépôt: 30.10.2013
(51) Int. Cl.: A01N 63/00, A01P 21/00, A01P 3/00, C05G 3/02

(54) **COMPOSITION À BASE DE BACTÉRIES POUR AMÉLIORER LA CROISSANCE DES PLANTES**
BAKTERIELLE ZUSAMMENSETZUNG ZUR VERBESSERUNG DES PFLANZENWACHSTUMS
BACTERIAL COMPOSITION FOR IMPROVING PLANT GROWTH

(30) Priorité: 30.10.2012 FR 1260339
(43) Date de publication de la demande: 09.09.2015
(73) Titulaire: Danstar Ferment AG, 6300 Zug (CH)
(72) Inventeur: COR, Olivier, F-44640 Saint Jean de Boiseau (FR); SANCHEZ, Bruno, F-31180 Castelmaurou (FR)
(74) Mandataire: IPAZ
(86) Numéro de dépôt international: PCT/IB2013/059795
(87) Numéro de publication internationale: WO 2014/068501

(56) Documents cités:
- WO-A1-2009/021824
- WO-A2-2006/089416
- US-A1- 2009 169 530
- Xymogen: "Lacidofil Product Label", https://www.xymogen.com/products/product-d etail.aspx?pid=103, 29 février 2012 (2012-02-29), page 1, XP055062081, Orlando Florida Extrait de l'Internet: URL:https://www.xymogen.com/assets/imageDi splay.ashx?formulaID=103&attachmentTypeID= 5 [extrait le 2013-05-07]
- CHAMPAGNE C P ET AL: "Viability of Lactobacillus rhamnosus R0011 in an apple-based fruit juice under simulated storage conditions at the consumer level", JOURNAL OF FOOD SCIENCE, WILEY-BLACKWELL PUBLISHING, INC, US, vol. 73, no. 5, 1 juin 2008 (2008-06-01), pages M221-M2226, XP009140699, ISSN: 0022-1147, DOI: 10.1111/J.1750-3841.2008.00775.X [extrait le 2008-06-09]

## Description

L'invention vise une composition pour améliorer la croissance et augmenter la biomasse des plantes.

Dans le domaine de l'agriculture, l'augmentation des rendements de production reste un enjeu majeur tant économiquement que socialement. Pour ce faire, de nombreuses compositions chimiques ou biologiques ont été proposées et conduisent à des résultats d'efficacité variables. Elles visent (i) à lutter directement contre des ravageurs de cultures, (ii) à protéger les plantes de stress abiotiques, (iii) à stimuler les défenses naturelles et (iv) à améliorer la nutrition et la croissance des plantes. US 2009/0169530 décrit l'utilisation de bactéries du genre *Pediococcus* ou *Lactobacillus* pour lutter contre les maladies des plantes. WO 2006/089416 décrit l'utilisation d'un engrais comprenant une bactérie d'acide lactique et une bactérie de la famille des *Bacillaceae.*

Dans ce contexte, les inventeurs ont constaté que, de manière surprenante, une espèce particulière de *Lactobacillus* exerçait des effets nettement supérieurs, en termes de croissance et de protection des plantes, à ceux obtenus avec d'autres espèces du genre *Lactobacillus* ou des composés antifongiques de référence. Cet effet surprenant sur la croissance des plantes peut s'accompagner d'un effet plus prévisible de protection vis-à-vis de certains champignons.

L'invention a donc pour but de fournir une nouvelle composition, de grande efficacité, pour améliorer la croissance et augmenter la biomasse des plantes.

Elle vise également la mise à profit des propriétés d'une telle composition dans une méthode visant à augmenter la croissance et la biomasse de plantes.

La composition de l'invention pour améliorer la croissance et augmenter la biomasse des plantes est caractérisée en ce qu'elle comprend au moins la souche vivante de bactérie de l'espèce *Lactobacillus rhamnosus* déposée à la CNCM sous le n° I-1720, le 1^{er} juillet 1996, et des engrais, herbicides, insecticides et/ou supports de culture, et en ce qu'elle se présente sous une forme appropriée pour le traitement au sol, le traitement de la partie racinaire ou de la partie foliaire et/ou pour le traitement de la graine.

Dans un mode de réalisation, la composition de l'invention est caractérisée en ce qu'elle comprend la ou les dites bactéries en combinaison avec d'autres microorganismes choisis parmi les levures, les bactéries et les champignons, vivants, inactivés ou en extraits.

L'invention vise également les formulations de la composition pour traitement au sol, traitement de la partie racinaire, traitement foliaire et/ou traitement de la graine.

Des formulations appropriées comprennent des poudres, notamment des poudres mouillables, des granulés, des micro-granulés, des traitements de semences, des formulations liquides, notamment des suspensions des compositions de l'invention dans l'eau et des encapsulations des bactéries.

Une formulation appropriée contient de 10⁶ à 10¹² CFU/g, notamment de 10⁸ à 10¹⁰ CFU/g de *Lactobacillus rhamnosus* de l'espèce *Lactobacillus rhamnosus* déposée à la CNCM sous le n° I-1720, le 1^{er} juillet 1996.

Ces formulations sont conditionnées dans des emballages les préservant de toute dégradation, entreposés de préférence à des températures n'excédant pas 20 °C. De telles formulations sont stables et peuvent être conservées durant au moins 10 mois.

L'invention porte en outre sur une méthode pour améliorer la croissance et augmenter la biomasse des plantes, caractérisée par l'application sur la graine, le sol, la partie racinaire ou foliaire de la plante, par exemple par pulvérisation de poudre ou de formulation liquide, en particulier une suspension dans l'eau, d'une composition telle que définie ci-dessus.

Une méthode selon l'invention pour améliorer la croissance des plantes est caractérisée en ce qu'elle comprend l'application sur la graine, le sol, la partie racinaire ou foliaire de la plante, d'une composition comprenant au moins une souche vivante de bactérie de l'espèce *Lactobacillus rhamnosus.*

Plus particulièrement, une méthode selon l'invention comprend l'application d'une formulation comprenant de 10⁶ à 10¹² CFU/g, notamment de 10⁸ à 10¹⁰ CFU/g de *Lactobacillus rhamnosus.*

Selon un mode de réalisation particulier, une méthode selon l'invention comprend l'application d'une composition comprenant la souche de *Lactobacillus rhamnosus* déposée à la CNCM sous le n° I-1720, le 1^{er} juillet 1996.

Dans un autre mode de réalisation, une méthode selon l'invention comprend l'application d'une composition comprenant une souche vivante de bactérie de l'espèce *Lactobacillus rhamnosus* en combinaison avec d'autres microorganismes choisis parmi les levures, les bactéries et les champignons, vivants, inactivés ou en extraits.

Dans un autre mode de réalisation, une méthode selon l'invention comprend l'application d'une composition comprenant une souche vivante de bactérie de l'espèce *Lactobacillus rhamnosus* et des engrais, herbicides, insecticides, fongicides, solutions minérales et/ou supports de culture.

Dans un autre mode de réalisation, une méthode selon l'invention comprend l'application d'une composition comprenant une souche vivante de bactérie de l'espèce *Lactobacillus rhamnosus* et qui se présente sous une forme appropriée pour le traitement au sol, le traitement de la partie racinaire ou de la partie foliaire et/ou pour le traitement de la graine. Plus particulièrement, une méthode selon l'invention comprend l'application d'une composition comprenant une souche vivante de bactérie de l'espèce *Lactobacillus rhamnosus* qui se présente sous forme de poudres mouillables, de granulés, de micro-granulés, de traitements de semences, sous forme de formulations liquides, notamment des suspensions dans l'eau et des encapsulations des bactéries.

Selon un autre mode de réalisation, une méthode selon l'invention comprend l'application d'une telle composition par pulvérisation de poudre ou de formation liquide, en particulier d'une suspension dans l'eau d'une telle composition.

Des applications répétées, par exemple toutes les 3 à 6 semaines, selon des doses variant de 13 à 30 mg / plant ou 150 à 250 g/Ha, de préférence sur la semence ou au moment de la levée, aux premiers stades de floraisons, apparaissent favorables au développement de la plante et augmentent sa croissance.

L'application de la composition et de la méthode, définies ci-dessus, aux cultures céréalières (blé, orge, avoine, seigle), aux plantes sarclées (betterave sucrière, pomme de terre, maïs), aux légumineuses (luzerne, trèfle, sainfoin), aux graminées (ray-grass, fétuque, dactyle festulolium), aux oléoprotéagineuses (soja, colza, poids, féverole, lupin blanc), aux cultures légumières et maraîchères, à l'arboriculture fruitière, à la viticulture et aux cultures ornementales (production florales, pépinières de jeune plants) présentent en particulier un intérêt.

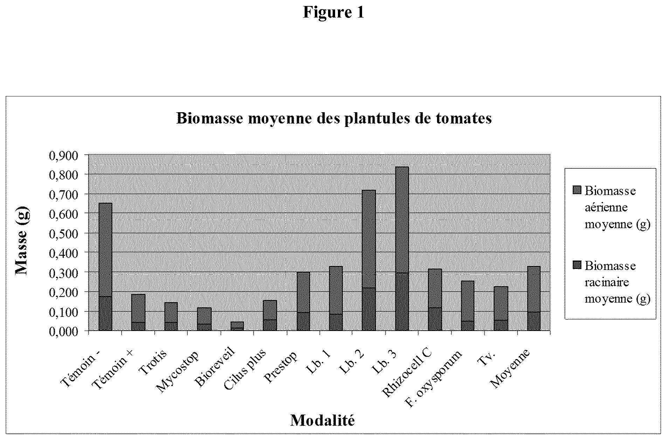

D'autres caractéristiques et avantages de l'invention sont donnés, à titre illustratif, dans les exemples qui suivent et sur la Figure unique qui rapporte les résultats d'essai sur des plants de tomates en chambre de culture.

### Exemple 1 : Préparation d'une composition à base de Lactobacillus rhamnosus.

Cette composition est élaborée à partir de :
Microgranulés stimulateurs de croissance (10 kg/ha) comprenant: -2% de *Lactobacillus rhamnosus,* soit 200g/Ha
- 1,0 % de dérivés de levure, soit 100g/Ha
- 1,5% de *Glomus intraradices* « champignons symbiotiques », soit 150 g/ha

### Exemple 2 : Formulation pour application sur semence

*Lactobacillus rhamnosus* à 2,6 g/Kg sur semences d'une céréale à paille de PMG 48

### Exemple 3 : Application à des cultures de tomates

Les essais dont les résultats sont rapportés ci-après ont été conduits selon le protocole suivant :
L'essai réalisé comporte 13 modalités (10 formulations de micro-organismes et 3 témoins (un positif avec le *Fusarium oxysporum* f. sp. *lycopersici* race 0, un témoin négatif sans pathogène, un témoin référence chimique réalisé avec un fongicide de contact, le TROTIS® utilisé à 5%). Sur ces 13 modalités, 15 répétitions ont été réalisées soit un total de 195 plantules de tomates.

La dose de *Lactobacillus rhamnosus* est de 13 mg par plante à 1,44.10⁹ CFU/g.

Le substrat utilisé est un mélange de 3 volumes d'un sol local, prélevé dans un champ d'une exploitation biologique, et de -et de 2 volumes de sable siliceux lavé de granulométrie comprise entre 0,3 et 1mm.L'analyse de ce sol est fournie dans le tableau suivant :

**TABLEAU**

| PARAMÈTRE | MÉTHODE | UNITÉ | RÉSULTAT |
|---|---|---|---|
| pH H₂0 | Potentiométrie | - | 7.5 |
| pH KCl | Potentiométrie | - | 7.1 |
| Matière Organique | Dosage RedOx au Dichromate | % ppm | 3.20 |
| oxydable | de potassium | | |

| Macroéléments | | | |
|---|---|---|---|
| Phosphore total | HClO₄ UV/VIS | mg/kg | 36 |
| Azote total | Kjeldahl | % p/p | 0.29 |
| Phospore Olsen | Bicarbonate de sodium UV/VIS | mg/kg | 78 |
| Potassium | CINH₄ | mg/kg | 1329 |
| Calcium | CINH₄ | mg/kg | 1770 |
| Magnésium | CINH₄ | mg/kg | 200 |
| Sodium | CINH₄ | mg/kg | 240 |
| CEC | Acétate de sodium | meq/100g | 20 |

| Microéléments | | | |
|---|---|---|---|
| Fer assimilable | EDTA | mg/kg | 51 |
| Manganèse assimilable | EDTA | mg/kg | 16 |
| Cuivre assimilable | EDTA | mg/kg | 4 |
| Zinc assimilable | EDTA | mg/kg | 10 |

| Caractérisation du mélange | | | |
|---|---|---|---|
| Sables | Bouyoucos | %pp | 44 |
| Limons | Bouyoucos | %pp | 25 |
| Argiles | Bouyoucos | %pp | 27 |

Les graines de tomate ont étés préalablement nettoyées dans un bain d'eau de javel à 10%, lavées à l'eau, réhydratées pendant 24h avant d'être semées. Les plantes ont été arrosées avec une solution nutritive Hewitt.

Les résultats sont donnés sur la Figure unique. Les composés utilisés dans l'essai sont les suivants :
Témoin négatif : témoin sans traitement, sans inoculation du pathogène
Témoin positif : témoin sans traitement, avec inoculation du pathogène
Trotis ®: antifongique
Mycostop : antifongique à base de *Streptomyces sp.*
Bioréveil : extraits de levure
Cilus plus : *Bacillus sp.*
Prestop : antifongique
Lb1 : *Lactobacillus acidophilus*
Lb2 : *Lactobacillus plantarum*
Lb3 : *Lactobacillus rhamnosus*
Rhizocell : *Bacillus sp.*
*Fusarium oxysporum* : souche de champignon non pathogène
Tv. : *ascomycete*

Comme le montrent les résultats obtenus dans cet essai, la biomasse moyenne des plantules de tomates (biomasse racinaire et biomasse aérienne) est nettement plus importante comparée à celle obtenue avec des produits usuels, et même avec des bactéries du même genre.

De façon surprenante, les tomates ayant reçu des traitements avec *Lactobacillus rhamnosus* bien qu'initialement infectées, présentent un développement supérieur aux témoins sains.

## Revendications

1. Composition pour augmenter la biomasse des plantes, **caractérisée en ce qu'**elle comprend au moins :
- la souche vivante de bactérie de l'espèce *Lactobacillus rhamnosus* déposée à la CNCM sous le n° I-1720 le 1^{er} juillet 1996 et
- des engrais, herbicides, insecticides et/ou supports de culture,
et **en ce qu'**elle se présente sous une forme appropriée pour le traitement au sol, le traitement de la partie racinaire ou de la partie foliaire et/ou pour le traitement de la graine.

2. Composition selon la revendication 1, **caractérisée en ce qu'**elle comprend la ou les dites bactéries en combinaison avec d'autres microorganismes choisis parmi les bactéries, les champignons et les levures, vivants, inactivés ou en extraits.

3. Composition selon l'une quelconque des revendications 1 ou 2, **caractérisée en ce qu'**elle se présente sous forme de poudre, notamment de poudres mouillables, de granulés, de micro-granulés, de traitement de semences, sous forme de formulations liquides, notamment des suspensions dans l'eau et des encapsulations des bactéries.

4. Formulation d'une composition selon l'une quelconque des revendications 1 à 3, **caractérisée en ce qu'**elle contient de 10⁶ à 10¹² CFU/g, notamment de 10⁸ à 10¹⁰ CFU/g de *Lactobacillus rhamnosus.*

5. Méthode pour augmenter la biomasse des plantes, **caractérisée par** l'application sur la graine, le sol, la partie racinaire ou foliaire de la plante d'une compositioncomprenant au moins une souche vivante de bactérie de l'espèce *Lactobacillus rhamnosus* ou d'une formulation comprenant de 10⁶ à 10¹² CFU/g, notamment de 10⁸ à 10¹⁰ CFU/g de *Lactobacillus rhamnosus.*

6. Méthode selon la revendication 5, **caractérisée en ce que** ladite composition comprend au moins la souche vivante de *Lactobacillus rhamnosus* déposée à la CNCM sous le numéro I-1720 le 1^{er} juillet 1996.

7. Méthode selon l'une quelconque des revendications 5 ou 6, **caractérisée en ce que** ladite composition comprend la ou lesdites bactéries en combinaison avec d'autres microorganismes choisis parmi les bactéries, les champignons et les levures, vivants, inactivés ou en extraits.

8. Méthode selon l'une quelconque des revendications 5 à 7, **caractérisée en ce que** ladite composition comprend en outre des engrais, herbicides, insecticides, fongicides, solutions minérales et/ou supports de culture.

9. Méthode selon l'une quelconque des revendications 5 à 8, **caractérisée en ce que** ladite composition se présente sous une forme appropriée pour le traitement au sol, le traitement de la partie racinaire ou de la partie foliaire et/ou pour le traitement de la graine.

10. Méthode selon la revendication 9, **caractérisée en ce qu'**elle se présente sous forme de poudre, notamment de poudres mouillables, de granulés, de micro-granulés, de traitement de semences, sous forme de formulations liquides, notamment des suspensions dans l'eau et des encapsulations des bactéries.

11. Méthode selon l'une quelconque des revendications 5 à 10, **caractérisée par** l'application sur la graine, le sol, la partie racinaire ou foliaire de la plante d'une formulation d'une composition comprenant de 10⁶ à 10¹² CFU/g, notamment de 10⁸ à 10¹⁰ CFU/g de *Lactobacillus rhamnosus.*

12. Méthode selon l'une quelconque des revendications 5 à 11, **caractérisée en ce que** l'application est réalisée par pulvérisation de poudre ou de formation liquide, en particulier d'une suspension dans l'eau de ladite composition.

13. Application de la composition selon l'une quelconque des revendications 1 à 3, ou d'une formulation selon la revendication 4, aux cultures céréalières (blé, orge, avoine, seigle), aux plantes sarclées (betterave sucrière, pomme de terre, maïs), aux légumineuses (luzerne, trèfle, sainfoin), aux graminées (ray-grass, fétuque, dactyle, festulolium), aux oléoprotéagineuses (soja, colza, poids, féverole, lupin blanc), aux cultures légumières et maraîchères, à l'arboriculture fruitière, à la viticulture et aux cultures ornementales, comme les productions florales, les pépinières de jeunes plants) pour augmenter la biomasse des plantes.

14. Application de la méthode selon l'une quelconque des revendications 5 à 12, aux cultures céréalières (blé, orge, avoine, seigle), aux plantes sarclées (betterave sucrière, pomme de terre, maïs), aux légumineuses (luzerne, trèfle, sainfoin), aux graminées (ray-grass, fétuque, dactyle, festulolium), aux oléoprotéagineuses (soja, colza, poids, féverole, lupin blanc), aux cultures légumières et maraîchères, à l'arboriculture fruitière, à la viticulture et aux cultures ornementales, comme les productions florales, les pépinières de jeunes plants) pour augmenter la biomasse des plantes.

## Patentansprüche

1. Zusammensetzung zur Steigerung der Biomasse von Pflanzen, **dadurch gekennzeichnet, dass** sie wenigstens
- den lebenden Stamm des Bakteriums der Spezies *Lactobacillus rhamnosus,* der am 1. Juli 1996 unter der Nr. I-1720 bei der CNCM hinterlegt wurde; und
- Düngemittel, Herbizide, Insektizide und/oder Kulturträger
umfasst, und dadurch, dass sie in einer Form vorliegt, die für die Behandlung des Bodens, die Behandlung der Wurzelpartie oder der Blattpartie und/oder für die Behandlung des Samens geeignet ist.

2. Zusammensetzung gemäß Anspruch 1, **dadurch gekennzeichnet, dass** sie das oder die Bakterien in Kombination mit anderen Mikroorganismen, die aus Bakterien, Pilzen und Hefen, lebend, inaktiviert oder als Extrakt, ausgewählt sind, umfasst.

3. Zusammensetzung gemäß einem der Ansprüche 1 oder 2, **dadurch gekennzeichnet, dass** sie in Form eines Pulvers vorliegt, insbesondere in Form von benetzbaren Pulvern, Granulaten, Mikrogranulaten, Saatbehandlungen, in Form von flüssigen Zubereitungen, insbesondere Suspensionen in Wasser, und eingekapselten Bakterien.

4. Zubereitung einer Zusammensetzung gemäß einem der Ansprüche 1 bis 3, **dadurch gekennzeichnet, dass** sie 10⁶ bis 10¹² KBE/g, insbesondere 10⁸ bis 10¹⁰ KBE/g, *Lactobacillus rhamnosus* enthält.

5. Verfahren zur Steigerung der Biomasse von Pflanzen, **dadurch gekennzeichnet, dass** eine Zusammensetzung, die wenigstens einen lebenden Stamm des Bakteriums der Spezies *Lactobacillus rhamnosus* oder einer Zubereitung, die 10⁶ bis 10¹² KBE/g, insbesondere 10⁸ bis 10¹⁰ KBE/g, *Lactobacillus rhamnosus* umfasst, umfasst, auf den Samen, den Boden, die Wurzel- oder Blattpartie der Pflanze aufgebracht wird.

6. Verfahren gemäß Anspruch 5, **dadurch gekennzeichnet, dass** die Zusammensetzung wenigstens den lebenden Stamm von *Lactobacillus rhamnosus,* der am 1. Juli 1996 unter der Nr. I-1720 bei der CNCM hinterlegt wurde, umfasst.

7. Verfahren gemäß einem der Ansprüche 5 oder 6, **dadurch gekennzeichnet, dass** die Zusammensetzung das oder die Bakterien in Kombination mit anderen Mikroorganismen, die aus Bakterien, Pilzen und Hefen, lebend, inaktiviert oder als Extrakt, ausgewählt sind, umfasst.

8. Verfahren gemäß einem der Ansprüche 5 bis 7, **dadurch gekennzeichnet, dass** die Zusammensetzung weiterhin Düngemittel, Herbizide, Insektizide, Fungizide, Minerallösungen und/oder Kulturträger umfasst.

9. Verfahren gemäß einem der Ansprüche 5 bis 8, **dadurch gekennzeichnet, dass** die Zusammensetzung in einer Form vorliegt, die für die Behandlung des Bodens, die Behandlung der Wurzelpartie oder der Blattpartie und/oder für die Behandlung des Samens geeignet ist.

10. Verfahren gemäß Anspruch 9, **dadurch gekennzeichnet, dass** sie in Form eines Pulvers vorliegt, insbesondere in Form von benetzbaren Pulvern, Granulaten, Mikrogranulaten, Saatbehandlungen, in Form von flüssigen Zubereitungen, insbesondere Suspensionen in Wasser, und eingekapselten Bakterien.

11. Verfahren gemäß einem der Ansprüche 5 bis 10, **dadurch gekennzeichnet, dass** eine Zubereitung einer Zusammensetzung, die 10⁶ bis 10¹² KBE/g, insbesondere 10⁸ bis 10¹⁰ KBE/g, *Lactobacillus rhamnosus* umfasst, auf den Samen, den Boden, die Wurzel- oder Blattpartie der Pflanze aufgebracht wird.

12. Verfahren gemäß einem der Ansprüche 5 bis 11, **dadurch gekennzeichnet, dass** das Aufbringen durch Zerstäubung eines Pulvers oder einer flüssigen Zubereitung, insbesondere einer Suspension der Zusammensetzung in Wasser, erfolgt.

13. Anwendung der Zusammensetzung gemäß einem der Ansprüche 1 bis 3 oder einer Zubereitung gemäß Anspruch 4 auf Getreidekulturen (Weizen, Gerste, Hafer, Roggen), auf Hackfrüchte (Zuckerrübe, Kartoffel, Mais), auf Leguminosen (Luzerne, Klee, Esparsette), auf Gräser (Weidelgras, Schwingel, Knaulgras, Wiesenschweidel), auf Ölpflanzen (Soja, Raps, Erbse, Ackerbohne, Weiße Lupine), auf Gemüsekulturen, auf Obstbaumkulturen, auf den Weinanbau und auf Zierpflanzenkulturen, wie Blumenproduktionen, Jungpflanzenschulen, um die Biomasse der Pflanzen zu steigern.

14. Anwendung des Verfahrens gemäß einem der Ansprüche 5 bis 12 auf Getreidekulturen (Weizen, Gerste, Hafer, Roggen), auf Hackfrüchte (Zuckerrübe, Kartoffel, Mais), auf Leguminosen (Luzerne, Klee, Esparsette), auf Gräser (Weidelgras, Schwingel, Knaulgras, Wiesenschweidel), auf Ölpflanzen (Soja, Raps, Erbse, Ackerbohne, Weiße Lupine), auf Gemüsekulturen, auf Obstbaumkulturen, auf den Weinanbau und auf Zierpflanzenkulturen, wie Blumenproduktionen, Jungpflanzenschulen, um die Biomasse der Pflanzen zu steigern.

## Claims

1. A composition for raising plant biomass, **characterised in that** it comprises at least:
- one bacterium live strain of the *Lactobacillus rhamnosus* species deposited at the CNCM under no.I-1720 on July 1^{st}, 1996, and
- fertilisers, herbicides, insecticides and/or growing media,
and **in that** it is in a form suitable for soil treatments, root part treatment, foliar treatment and/or seed treatment.

2. The composition according to claim 1, **characterised in that** it comprises said bacterium (bacteria) in combination with other micro-organisms chosen among bacteria, fungi and yeasts, live, inactivated or as extracts.

3. The composition according to any of claims 1 or 2, **characterised in that** it is in the form of a powder, in particular wettable powders, granules, micro-granules, seed treatments, liquid formulations, in particular water suspensions and bacteria encapsulations.

4. A formulation of a composition according to one of claims 1 to 3, **characterised in that** it contains 10⁶ to 10¹² CFU/g, in particular 10⁸ to 10¹⁰ CFU/g of *Lactobacillus rhamnosus.*

5. A method for improving plant biomass, **characterised by** applying onto the seed, the soil, the root or foliar part of the plant a composition comprising at least one bacterium live strain of the *Lactobacillus rhamnosus* species or a formulation comprising 10⁶ to 10¹² CFU/g, in particular 10⁸ to 10¹⁰ CFU/g of *Lactobacillus rhamnosus.*

6. A method according to claim 5, **characterised in that** said composition comprises at least one bacterium live strain of the *Lactobacillus rhamnosus* species deposited at the CNCM under no.I-1720 on July 1^{st}, 1996.

7. Method according to claim 5 or 6, **characterised in that** said composition comprises said bacterium or bacteria in combination with other micororganisms chosen among micro-organisms chosen among bacteria, fungi and yeasts, live, inactivated or as extracts.

8. Method according to any of claim 5 to 7, **characterised in that** said composition comprises fertilisers, herbicides, insecticides, fungicides, mineral solutions and/or growing media.

9. Method according to any of claim 5 to 8, **characterised in that** said composition is in a form suitable for soil treatments, root part treatment, foliar treatment and/or seed treatment.

10. Method according to claim 9, **characterised in that** said composition is in the form of a powder, in particular wettable powders, granules, micro-granules, seed treatments, liquid formulations, in particular water suspensions and bacteria encapsulations.

11. Method according to any of claim 5 to 10, **characterised by** the application on the seed, the soil, the root or foliar part of a plant of a formulation of a composition comprising 10⁶ to 10¹² CFU/g, in particular 10⁸ to 10¹⁰ CFU/g of *Lactobacillus rhamnosus.*

12. Method according to any of claim 5 to 11, **characterised in that** the application is by spraying powder or liquid formulation, in particular a water suspension of said composition.

13. An application of a composition according to any of claims 1 to 3, or of a formulation according to claim 4, to grain crops (wheat, barley, oats, rye), row crops (sugar beet, potato, corn), legume crops (alfalfa, clover, sainfoin), gramineae (rye-grass, fescue, orchard grass, festulolium), oil and protein seed crops (soy, rapeseed, peas, field bean, white lupine), market gardening and vegetable crops, fruit farming, viticulture and ornamental crops, as flower productions, young plant nursery) for raising plant biomass.

14. An application of a method according to any of claims 5 to 12, to grain crops (wheat, barley, oats, rye), row crops (sugar beet, potato, corn), legume crops (alfalfa, clover, sainfoin), gramineae (rye-grass, fescue, orchard grass, festulolium), oil and protein seed crops (soy, rapeseed, peas, field bean, white lupine), market gardening and vegetable crops, fruit farming, viticulture and ornamental crops, as flower productions, young plant nursery) for raising plant biomass.
